# EUROPEAN PATENT SPECIFICATION

(11) **EP 2 642 022 B1**
(45) Date of publication and mention of the grant of the patent: **14.09.2016**
(21) Application number: 11793320.0
(22) Date of filing: 15.02.2011
(51) Int. Cl.: D06N 3/00, B32B 37/15, B29C 41/26, C14B 7/00

(54) **DRY-PROCESS ARTIFICAL LEATHER MANUFACTURING MACHINE**
MASCHINE ZUR HERSTELLUNG VON KUNSTLEDER IN EINEM TROCKENVERFAHREN
MACHINE DE FABRICATION DE CUIR ARTIFICIEL PAR PROCÉDÉ PAR VOIE SÈCHE

(30) Priority: 19.11.2010 CN 201010550956
(43) Date of publication of application: 25.09.2013
(73) Proprietor: Li, Zhi, Guangdong 523000 (CN)
(72) Inventor: Li, Zhi, Guangdong 523000 (CN)
(74) Representative: Office Kirkpatrick
(86) International application number: PCT/CN2011/070988
(87) International publication number: WO 2012/065372

(56) References cited:
- BE-A- 725 175
- CN-Y- 2 218 195
- CN-Y- 2 838 771
- CN-Y- 2 878 061
- CN-Y- 201 132 411
- DE-A1- 1 752 337
- GB-A- 1 095 705
- GB-A- 1 255 185
- GB-A- 1 398 238
- JP-A- 54 015 096
- JP-A- 62 129 179
- US-A- 3 573 964
- US-A- 3 602 944
- US-A- 3 703 403

## Description

### FIELD OF THE INVENTION

The invention relates to a processing machine, in particular to a dry artificial leather manufacturing machine for manufacturing artificial leather.

### BACKGROUND OF THE INVENTION

It is known that there are two traditional methods for manufacturing artificial leather, namely dry method and wet method. The wet method is to add resin raw materials into water for mixing to produce a solution, immerse base cloth into the solution for rolling and coating, and finally produce the artificial leather through repeated immersion, rolling, coating and drying. The wet method has the disadvantages that: a great deal of waste water can be generated in the wet artificial leather manufacturing process; the manufacturing processes are complex; and both the cost of machinery equipment and the operating cost of the machinery equipment are high. Therefore, actually the dry method is mostly adopted for manufacturing the artificial leather. Just as the name implies, the dry artificial leather manufacturing method is a method for coating resin on the surface of base cloth without the process of rolling and coating of the base cloth in a solution. However, if the resin is directly coated on the surface of the base cloth, the surface of finished products will be uneven due to cloth marks and the beautiful appearance of the finished products can be affected. Therefore, the traditional dry artificial leather manufacturing process is to coat various functional resins on the surface of release paper, laminate the release paper on base cloth, and finally peel off the release paper to produce dry artificial leather.

The traditional dry artificial leather manufacturing machine comprises a release paper feeding device, a release paper receiving device, a release paper storage device which is arranged for continuous production, a knife coating unit, a drying oven, a base cloth feeding unit, a preheating unit before lamination, a laminating unit, a shaping oven after lamination, a cooling unit before finishing, a release paper peeling unit, a release paper winding unit, a finished product winding unit, etc.. During the production, release paper passes through the release paper feeding device, the release paper receiving device and the release paper storage device and is coated with resin through the knife coating unit; the release paper after knife coating enters into the oven and is dried by hot-blast air; the dried release paper enters into the laminating unit; cloth passes through the base cloth feeding unit and the preheating unit and is fed into the laminating unit; the cloth and the release paper after knife coating are laminated into a whole through the pressurizing lamination of the laminating unit; the obtained product is dried and shaped by the shaping oven after lamination and is cooled and peeled off to form two layers, namely artificial leather and the release paper; and the artificial leather and the release paper are respectively winded into finished products. If resins with different functions are required for knife coating for a plurality of times, a plurality of knife coating units and drying ovens are required to be designed.

The machinery equipment for manufacturing dry artificial leather by the traditional method is very large. In general, the production line is 100 meters in length, which is mainly due to straight-line ovens, low-efficiency air convection heating means, independent knife coating units, drying units and laminating units, and related equipment of release paper. As the production line is too long, the operations are very inconvenient and more operators are required.

The traditional dry artificial leather manufacturing method not only has the disadvantages of large equipment and high energy consumption but also, more importantly, requires a large number of release paper consumables, which has become the symbolic characteristic of the dry artificial leather manufacturing method long time ago. In general, RMB 0.5 worth of release paper is required for the production of one meter of finished products. If calculated by 8 hours per day per machine and 1,200 meters of finished products per hour, each machine requires RMB 1.7 million worth of release paper every year. As from the point of view of environmental protection, one meter of release paper is 80 grams in weight, thus each machine needs to consume 276 tons of pure paper every year. Therefore, the use of the release paper is unfavorable to both environmental protection and cost saving, so people have been actively looking for better artificial leather manufacturing methods for a long time.

Document US 3 573 964 discloses method to apply a coating of plastic material to fabrics by applying at least one coating of plastisol to the surface of an internally heated rotating cylinder wherein the surface àossesses the property of release with respect to the plastisol, applying the plastisol to a fabric just prior to the gelling of the plastisol to form a laminate, pressing the laminate against the cylinder, removing the laminate from cylinder and fusing the plastisol.

### SUMMARY OF THE INVENTION

The invention aims to overcome the defects in the prior art and provide a dry artificial leather manufacturing machine having the advantages of small volume, low cost, high energy utilization, low noise pollution, and no need of a large number of release paper consumables.

In order to achieve the aim, the invention adopts the proposal that: the invention relates to a dry artificial leather manufacturing machine, which comprises a stand and a heating wheel mechanism, wherein the heating wheel mechanism is arranged on the stand and comprises a scraper mechanism, a rotationally moved heating wheel and at least one laminating wheel; the heating wheel is provided with a heating device; the surface of the outer circumference of the heating wheel is a flat work surface; the work surface of the scraper mechanism corresponding to the heating wheel is arranged above the heating wheel; the work surface of the laminating wheel corresponding to the heating wheel is arranged at the side of the heating wheel; and the laminating wheel in the rotational direction of the heating wheel is positioned in front of the scraper mechanism, the scraper mechanism comprising a scraper, a stock stop and pressure lifting mechanisms, wherein both the scraper and the stock stop are arranged at the side of the work surface of the heating wheel; the scraper in the rotational direction of the heating wheel is positioned in front of the stock stop; the scraper is arranged at the side of the stock stop; the left end and the right end of the scraper are respectively fixedly connected with a joint structure; the scraper is connected with the pressure lifting mechanisms through the joint structures which are respectively fixedly connected to the left end and the right end of the scraper; and the pressure lifting mechanisms are connected with the stand,
the left end and the right end of the scraper being respectively connected with a compensating wheel.

The work surface of the heating wheel is provided with a Teflon anti-sticking layer.

The heating wheel mechanism comprises at least two laminating wheels.

### - DELETED SECTION

### DELETED SECTION

Each joint structure is provided with a height adjusting mechanism which is provided with a longitudinally extended lifting rack; and a compensating wheel is arranged under the lifting rack.

Each pressure lifting structure comprises a cylinder, a slider and a slideway which is arranged on the stand, wherein the cylinder comprises a piston rod; and the slider is fixedly connected with the piston rod of the cylinder, slideably connected with the slideway, and fixedly connected with the joint structure.

The dry artificial leather manufacturing machine is also provided with a winding mechanism for winding finished products.

The dry artificial leather manufacturing machine is also provided with an unwinding mechanism for providing a base strip.

At least two heating wheel mechanisms are continuously arranged.

The dry artificial leather manufacturing machine has the advantages that: Firstly, as the surface of the heating wheel in the dry artificial leather manufacturing machine is processed into a smooth surface, the surface of artificial leather manufactured by the method is also smooth. As the dry artificial leather manufacturing machine adopts the heating wheel as a carrier, no release paper is needed in the process of manufacturing dry artificial leather by the method, that is to say, the heating wheel replaces the release paper used in the traditional method. Moreover, the heating wheel can be used for a long time, which is extremely favorable to both cost saving and environmental protection.

Secondly, both heating and drying (or foaming) processes of the traditional dry artificial leather manufacturing machine are performed in an extremely long oven. It is known that there are mainly three kinds of heat transfer means, namely conduction, convection and radiation, and the efficiency of direct-contact conduction is much higher than that of air convection as for general heat transfer. As the traditional machine uses an oven and adopts the hot-blast air convection means for heating while the dry artificial leather manufacturing machine uses the heating wheel for direct heating, the conductive efficiency is greatly improved and the effects of environmental protection and energy saving are obvious. Moreover, the heat energy of the dry artificial leather manufacturing machine is reduced from 1,300,000Kcal/h to 300,000Kcal/h. Meanwhile, as the dry artificial leather manufacturing machine adopts the direct-contact heat conduction means of the heating wheel and does not need an air blower adopted by the traditional air convection heating means, the noise caused by the air blower is avoided, thus the manufacturing environment of operators is greatly improved.

Thirdly, the processes of heating and feeding of coating materials and the base strip can be completed through the heating wheel in the dry artificial leather manufacturing machine. Moreover, the scraper mechanism for uniform distribution of the coating materials and the laminating wheels are uniformly distributed on the circumferential surface of the heating wheel; a scraping device, a heating device, a feeding device, a laminating device and a shaping device in the prior art are skillfully combined into a heating wheel mechanism; and the processes of scraping, heating, feeding, laminating and shaping share the same heating wheel, thus the five steps of scraping, heating, feeding, laminating and shaping of the coating materials and the base strip can be completed when the coating materials and the base strip pass through the heating wheel mechanism, consequently the mechanical structure is greatly simplified and the cost is saved. Meanwhile, as the invention changes the traditional straight-line feeding means into circular feeding in the processes of scraping, heating, feeding, laminating and shaping of the coating materials and the base strip, the length of the production line is greatly shortened, and specifically, the length of the production line of artificial leather is reduced from the original 100 meters or so to 20 meters or so, thus the occupied space is reduced. Moreover, the problem of difficult control of the tension caused by the complexity of an actuating mechanism is effectively solved. Furthermore, due to the structure, the dry artificial leather manufacturing machine is easier to operate and only few operators are required.

### BRIEF DESCRIPTION OF THE DRAWINGS

FIG. 1 is a structural diagram of the dry artificial leather manufacturing machine of the invention;
FIG. 2 is a partial enlarged drawing of the FIG. 1;
FIG. 3 is a structural diagram of the embodiment 1 of the dry artificial leather manufacturing machine of the invention;
FIG. 4 is a structural diagram of the embodiment 2 of the dry artificial leather manufacturing machine of the invention;
FIG. 5 is a structural diagram of the embodiment 3 of the dry artificial leather manufacturing machine of the invention;
FIG. 6 is a structural diagram of the embodiment 4 of the dry artificial leather manufacturing machine of the invention;
FIG. 7 is a structural diagram of the embodiment 5 of the dry artificial leather manufacturing machine of the invention;
FIG. 8 is a structural diagram of the embodiment 6 of the dry artificial leather manufacturing machine of the invention; and
FIG. 9 is a structural diagram of the embodiment 7 of the dry artificial leather manufacturing machine of the invention.

### DETAILED DESCRIPTION OF THE PREFERRED EMBODIMENTS

Further description is given below to the invention through the embodiments.

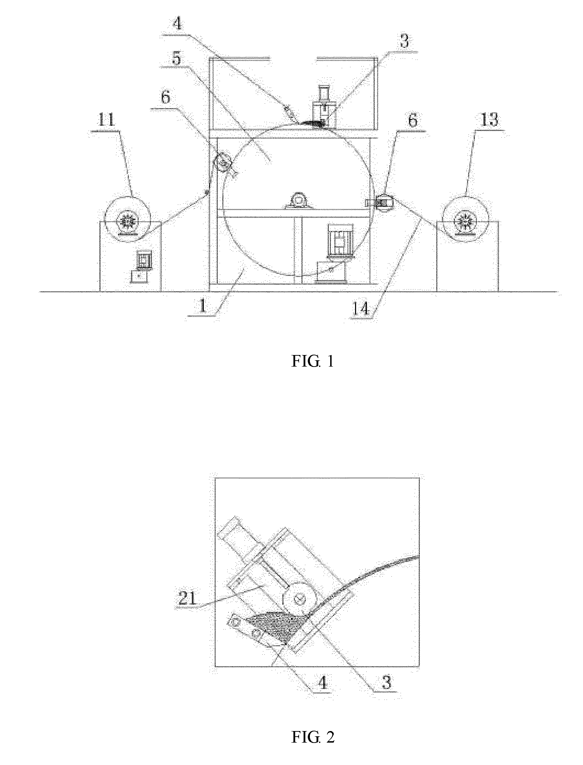

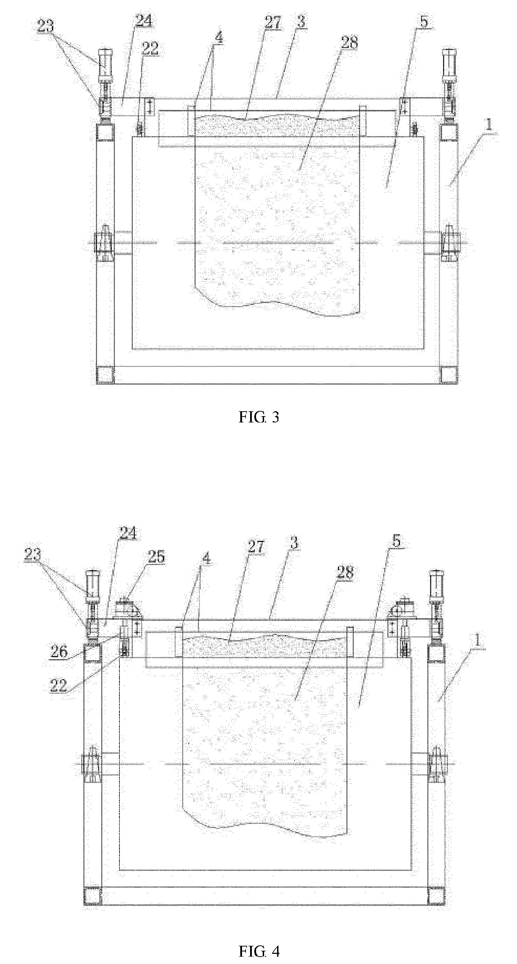

As shown in FIGS. 1 and 3, a dry artificial leather manufacturing machine comprises a stand 1 and a heating wheel mechanism 2, wherein the heating wheel mechanism 2 is arranged on the stand 1 and comprises a scraper mechanism, a rotationally moved heating wheel 5 and laminating wheels 6; the heating wheel 5 is provided with a heating device for heat supply; the surface of the outer circumference of the heating wheel 5 is a flat work surface; the work surface of the scraper mechanism corresponding to the heating wheel 5 is arranged above the heating wheel 5; the work surfaces of the laminating wheels 6 corresponding to the heating wheel 5 are arranged at the side of the heating wheel 5; and the laminating wheels 6 in the rotational direction of the heating wheel 5 are positioned in front of the scraper mechanism.

Wherein, the scraper mechanism comprises a scraper 3 and a stock stop 4; the scraper 3 in the rotational direction of the heating wheel 5 is positioned in front of the stock stop 4; and the scraper 3 is arranged at the side of the stock stop 4. Moreover, the heating wheel mechanism 2 comprises two laminating wheels 6; the dry artificial leather manufacturing machine is also provided with a winding mechanism 11 and an unwinding mechanism 13 for providing a base strip 14; and one laminating wheel 6 is connected with the unwinding mechanism 13 through the base strip 14. Furthermore, the surface of the heating wheel in the embodiment is provided with a Teflon anti-sticking layer for better peeling off products from the heating wheel 5. As shown in FIG. 3, the scraper 3 is arranged at the side of the work surface of the heating wheel 5 through a mounting rack 21. The heating wheel 5 is a wheel with heat conducting function. The heating device can be a device for introducing steam, heat conducting oil or hot-blast air into the heating wheel 5 and can also be an electric heating device which is arranged inside the heating wheel 5.

During operation, firstly, coating materials 27 are poured among the heating wheel 5, the stock stop 4 and the scraper 3 by an operator; secondly, when the heating wheel 5 performs rotational movement, the coating materials 27 are uniformly distributed on the work surface of the heating wheel 5 through the scraper 3 to form a coating 28; thirdly, the coating 28 is driven by the heating wheel 5 to move forward and heated and dried by heat conducted by the heating wheel 5, and meanwhile, the base strip 14 is driven by the heating wheel 5 and the laminating wheels 6 to move forward ceaselessly; fourthly, the coating 28 and the base strip 14 are embossed into a whole through the laminating wheels 6; and fifthly, the obtained product is heated, dried and shaped by the heating wheel 54 and winded to obtain a finished product.

Of course, there can be only one laminating wheel 6 on the work surface of the heating wheel 5 in the dry artificial leather manufacturing machine of the invention. As the coating materials 27 have certain viscosity, the coating 28 formed after the coating materials 27 pass through the scraper 3 will be laminated on the work surface of the heating wheel 5 and move forward along with the heating wheel 5. After the coating 28 is laminated to the base strip 14 through the laminating wheel 6, a complex formed by the coating 28 and the base strip 14 is still laminated on the work surface of the heating wheel 5, thus the effects of heating and shaping work until the unwinding process is performed.

In the dry artificial leather manufacturing machine of the invention, the heating wheel 5 can be 1.2 meters in diameter and can also adopt other diameters. However, in order to meet the requirements of heating and drying of the coating materials 27, the smaller the diameter of the heating wheel 5, the slower the rotational speed of the heating wheel 5. In a similar way, the larger the diameter of the heating wheel 5, the faster the rotational speed of the heating wheel 5, consequently the higher the production efficiency.

### Embodiment 1

As shown in FIG. 3, the left end and the right end of the scraper 3 are respectively provided with a first mandrel; the first mandrels are connected with compensating wheels 22 through bearings; the scraper 3 is connected with pressure lifting mechanisms 23 through joint structures 24 which are respectively fixedly connected to the left end and the right end of the scraper 3; and the pressure lifting mechanisms 23 are connected with the stand 1.

Each pressure lifting mechanism 23 comprises a cylinder, a slider and a slideway which is arranged on the stand 1, wherein the cylinder comprises a piston rod; and the slider is fixedly connected with the piston rod of the cylinder, slideably connected with the slideway, and fixedly connected with the joint structure 24.

As the concentricity of a heating wheel with large diameter cannot be processed to be very high by the prior art, the heating wheel will be deformed after long-term heating and use, consequently the thickness of the coating will be uneven.

The compensating wheels 22 are pressed on the work surface of the heating wheel 5 through the pressure lifting mechanisms 23. The thickness of the coating 28 depends on the clearance between the scraper 3 and the work surface of the heating wheel 5. As the compensating wheels 22 are pressed on the work surface of the heating wheel 5 all the time, that is to say, the compensating wheels 22 and the work surface of the heating wheel 5 are always maintained in a tangential state, the clearance between the scraper 3 and the work surface of the heating wheel 5 depends on the diameter of the compensating wheels 22. As the diameter of the compensating wheels 22 is comparatively small, the concentricity of the heating wheel 5 is comparatively high. During the rotational movement of the heating wheel 5, when the concentricity of the heating wheel 5 is low and the diameter of the heating wheel 5 is non-conforming, the clearance between a blade of the scraper 3 and the work surface of the heating wheel 5 can still be maintained to be always conformable due to the structure, thus the thickness of the produced coating 28 is always the same in the length direction of products.

People only needs to adjust the distance between tangential points between the compensating wheels 22 and the work surface of the heating wheel 5 and the blade of the scraper 3 in order to obtain different coating thicknesses, and can adopt the means of replacing the compensating wheels 22 with different diameters in order to adjust the distance.

### Embodiment 2

As shown in FIG. 4, the left end of the right end of the scraper 3 are respectively fixedly connected with a joint structure 24; each joint structure 24 is provided with a height adjusting mechanism 25 which is provided with a longitudinally extended lifting rack 26; a second mandrel is arranged on the lower part of the lifting rack 26 and connected with a compensating wheel 22 through a bearing; the scraper 3 is connected with pressure lifting mechanisms 23 through the joint structures 24 which are respectively fixedly connected to the left end and the right end of the scraper 3; and the pressure lifting mechanisms 23 are connected with the stand 1.

Each pressure lifting mechanism 23 comprises a cylinder, a slider and a slideway which is arranged on the stand 1, wherein the cylinder comprises a piston rod; and the slider is fixedly connected with the piston rod of the cylinder, slideably connected with the slideway, and fixedly connected with the joint structure 24.

People only needs to adjust the distance between tangential points between the compensating wheels 22 and the work surface of the heating wheel 5 and the blade of the scraper 3 in order to obtain different coating thicknesses. The distance between the work surface of the heating wheel 5 and the blade of the scraper 3 can be changed by adjusting the height of the compensating wheels 22 relative to the stand 1 after withdrawing or laying down the lifting racks 26 through the height adjusting mechanisms 25.

### Embodiment 3

Heating mantles 7, a storage rack 18, a cooling wheel set 12 and exhaust gas drainage devices 8 are additionally arranged on the basis of the embodiment 2.

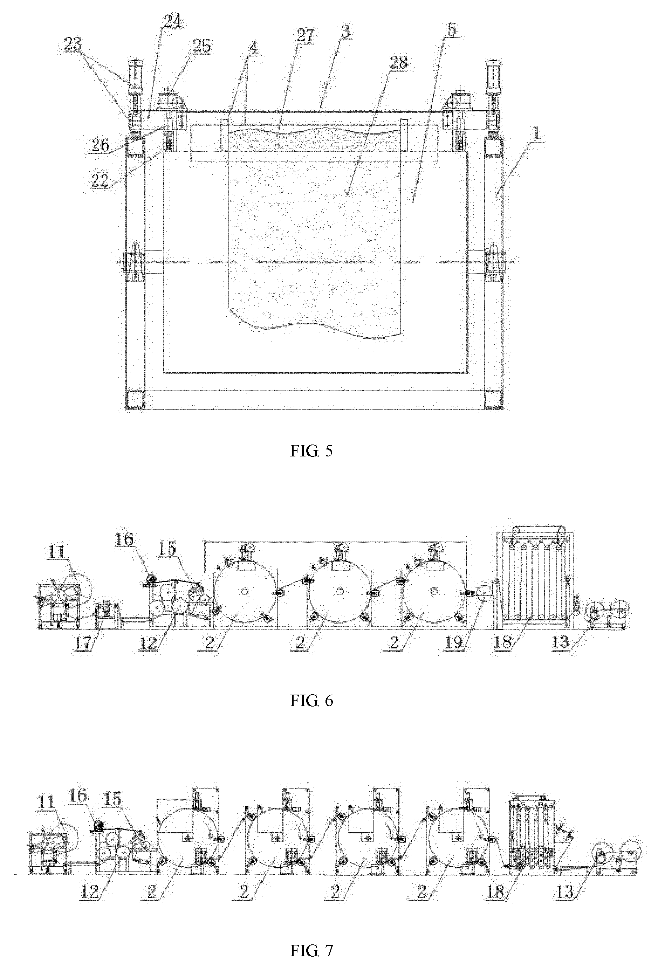

As shown in FIG. 5, the auxiliary heating mantles 7 are additionally arranged outside the heating wheel 5 to improve the effects of heating and drying. In order to improve the speed and the automation degree, the storage rack 18 which can complete unwinding roll replacement without stoppage of the machine is additionally arranged in the embodiment, and the cooling wheel set 12 is additionally arranged between the heating wheel mechanism 2 and the winding mechanism 11. As certain coating materials 27 contain volatile solvent, the exhaust gas removal devices 8 are additionally arranged in the embodiment. During the actual production, the exhaust gas removal devices 8 are connected to the insides of solvent recovery devices so as to be favorable for environmental protection.

### Embodiment 4

During the actual production, the thickness of the coating 28 can be set by adjusting the clearance between the scraper 3 and the heating wheel 5. However, when the thickness of the required coating 28 is comparatively high and cannot be met by adjusting the clearance between the scraper 3 and the heating wheel 5, more than two heating wheel mechanisms 2 are required to be continuously arranged. During the production of artificial leather, when coatings 28 made of different materials are required to be processed on the base strip 14 in turn in order to obtain the artificial leather with better performances, more than two heating wheel mechanisms 2 are also required to be continuously arranged.

As shown in FIG. 6, three heating wheel mechanisms 2 are continuously arranged in the embodiment, and a plurality of laminating wheels 6 are uniformly arranged on the heating wheel 5 of each heating wheel mechanism 2. The coating materials 27 pass through the three heating wheel mechanisms 2 in turn so that the coating materials 27 can be better laminated to the base strip 14. When the same coating materials 27 are fed into stock stops 4 of the three heating wheel mechanisms 2, artificial leather with a comparatively thick coating 28 can be obtained finally. When three different coating materials 27 are fed into the stock stops 4 of the three heating wheel mechanisms 2, artificial leather with three different coatings 28 can be obtained finally and has better performances.

In the embodiment, an embossing mechanism 15, a film roll unwinding device 16, a cooling wheel set 12 and an edge-cutting device 17 are arranged between the winding mechanism 11 and a third heating wheel mechanism 2. After the base strip 14 comes out from the third heating wheel mechanism 2, the base strip 14 is delivered by an idler pulley to the embossing mechanism 15 for embossing processing and subjected to cooling, edge cutting and winding to obtain a finished product, and the surface of the artificial leather finished product obtained by the method is more diversified. Meanwhile, a storage rack 18 and a cloth preheating device 19 are arranged between a first heating wheel mechanism 2 and the unwinding mechanism 13.

Moreover, an automatic edge aligning device, a tension control device and a heating wheel cleaning device can also be additionally arranged inside the dry artificial leather manufacturing machine of the invention so as to further improve the performances of the machine and the automation degree. In the embodiment, the stand 1 is also provided with a staircase and a handrail for more convenient operations performed by operators.

### Embodiment 5

In order to obtain artificial leather with more comprehensive functions, for example, artificial leather finished products with four effect layers, namely a surface layer, a filling layer, a foaming layer and a contact agent layer or in order to obtain thicker artificial leather products, as shown in FIG. 7, a heating wheel mechanism 2 is additionally arranged in the embodiment on the basis of the embodiment 4, and a plurality of laminating wheels 6 are uniformly arranged on the heating wheel 5 of each heating wheel mechanism 2 so that the coating materials 27 can be better laminated to the base strip 14. Meanwhile, the cloth preheating device 19 and the edge-cutting device 17 are not arranged in the embodiment.

### Embodiment 6

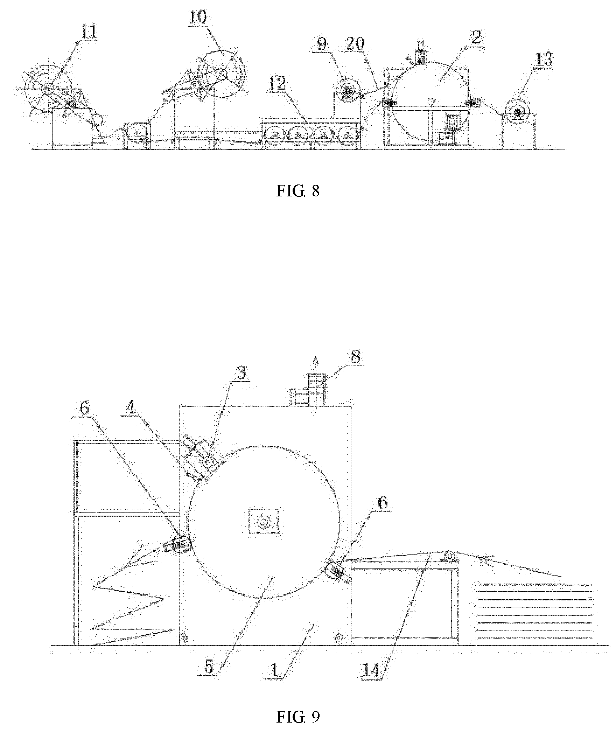

As shown in FIG. 8, in order to obtain the surface effect of traditional release paper products during the actual production, release paper is required during the production of certain products. Therefore, in the embodiment, a release paper unwinding mechanism 9 is also arranged at the side of the heating wheel 5 and connected with the heating wheel 5 through a release paper strip 20, and a release paper winding mechanism 10 is also arranged at the side of the winding mechanism 11. When the release paper is required to be used for manufacturing and processing, the processes can still be completed by the dry artificial leather manufacturing machine in the embodiment.

During operation, the release paper is fed between the scraper 3 and the heating wheel 5 through the release paper unwinding mechanism 9; the coating materials 27 are positioned on the stock stop 4 and uniformly distributed on the release paper through the scraper 3; the coated release paper is properly dried by the heating wheel 5 and laminated to the base strip 14 through the laminating wheels 6; the obtained product is heated and shaped by the heating wheel 5 and delivered to a cooling mechanism for cooling; and the release paper and an artificial leather finished product are respectively winded after the release paper is peeled off from the artificial leather finished product.

Of course, as the same with the embodiment 4 and the embodiment 5, the embodiment 6 can also be provided with a plurality of heating wheel mechanisms 2.

### Embodiment 7

As shown in FIG. 9, the dry artificial leather manufacturing machine of the invention is also suitable for the lamination of real leather. When the base strip 14 is real leather, an operator only needs to change original base materials into real leather. Meanwhile, the unwinding mechanism 13 and the winding mechanism 11 are not required in the embodiment, and the two steps of unwinding and winding can be manually completed. Moreover, an exhaust gas removal device 8 is also arranged in the embodiment.

Of course, a feeding device and a receiving device which are suitable for the real leather can be additionally arranged in the embodiment 7. When the base strip 14 is not real leather, the processes of unwinding and winding of the base strip 14 can also be manually completed.

In addition, the scraper 3 can adopt different types, for example, a sharp knife, a circular knife or a "J"-shaped scraper 3. Different means can also be adopted to adjust the clearance of the scraper 3 as long as the aim of clearance adjustment can be achieved, and no further description is given here. Moreover, as there are two artificial leather manufacturing processes, namely dry lamination and wet lamination, the laminated position of the base strip 14 and the coating materials 27 can be arranged near the scraper 3 according to different requirements so that the coating materials 27 can be laminated to the base strip 14 in a half-dry state, and can also be arranged in front of the scraper 3 and be at a distance with the scraper 3 so that the coating materials 27 can be laminated to the base strip 14 in a full-dry state. Of course, a plurality of laminated positions formed by laminating wheels 6 can also be arranged on the same machine so as to meet different technological requirements.

## Claims

1. A dry artificial leather manufacturing machine, comprising a stand (1) and a heating wheel mechanism (2), **characterized in that** the heating wheel mechanism (2) is arranged on the stand (1) and comprises a scraper (3) mechanism, a rotationally moved heating wheel (5) and at least one laminating wheel (6), the heating wheel (5) being provided with a heating device, the surface of the outer circumference of the heating wheel (5) being a flat work surface; the work surface of the scraper (3) mechanism corresponding to the heating wheel arranged above the heating wheel (5), the work surface of the laminating wheel (6) corresponding to the heating wheel (5) arranged at the side of the heating wheel(5) and the laminating wheel in the rotational direction of the heating wheel (5) being positioned in front of the scraper (3) mechanism,
the scraper mechanism comprises a scraper (3), a stock stop (4) and pressure lifting mechanisms(23), both the scraper (3) and the stock stop (4) being arranged at the side of the work surface of the heating wheel (5), the scraper (3) in the rotational direction of the heating wheel being positioned in front of the stock stop (4), the scraper (3) being arranged at the side of the stock stop (4), the left end and the right end of the scraper (3) being respectively fixedly connected with a joint structure (24), the scraper (3) being connected with the pressure lifting mechanisms through the joint structures (24) which are respectively fixedly connected to the left end and the right end of the scraper (3) and the pressure lifting mechanisms (23) being connected with the stand (1).
the left end and the right end of the scraper (3) are respectively connected with a compensating wheel (22).

2. The dry artificial leather manufacturing machine according to claim 1, **characterized in that** the work surface of the heating wheel is provided with a Teflon anti-sticking layer.

3. The dry artificial leather manufacturing machine according to either one of claims 1 or 2, **characterized in that** the heating wheel mechanism (2) comprises at least two laminating wheels (6).

4. The dry artificial leather manufacturing machine according to claim 14, **characterized in that** each joint structure (24) is provided with a height adjusting mechanism (25) which is provided with a longitudinally extended lifting rack (26) and a compensating wheel (22) is arranged under the lifting rack (26).

5. The dry artificial leather manufacturing machine according to claim 41, **characterized in that** each pressure lifting mechanism (23) comprises a cylinder, a slider and a slideway which is arranged on the stand (1), the cylinder comprising a piston rod, and the slider being fixedly connected with the piston rod of the cylinder, slideably connected with the slideway, and fixedly connected with the joint structure (24).

6. The dry artificial leather manufacturing machine according to any one of the preceding claims, **characterized in that** the dry artificial leather manufacturing machine is also provided with a winding mechanism (11) for winding finished products.

7. The dry artificial leather manufacturing machine according to any one of the preceding claims, **characterized in that** the dry artificial leather manufacturing machine is also provided with an unwinding mechanism (13) for providing a base strip (14).

8. The dry artificial leather manufacturing machine according to any one of the preceding claims, **characterized in that** at least two heating wheel mechanisms (2) are continuously arranged.

## Patentansprüche

1. Maschine zur Trockenherstellung von Kunstleder, die ein Gestell (1) und einen Heizradmechanismus (2) umfasst, **dadurch gekennzeichnet, dass** der Heizradmechanismus (2) auf dem Gestell (1) angeordnet ist und einen Schaber-(3)-Mechanismus, ein drehbewegtes Heizrad (5) und zumindest ein Laminierrad (6) umfasst, wobei das Heizrad (5) mit einer Heizvorrichtung versehen ist, wobei die Oberfläche des Außenumfangs des Heizrads (5) eine flache Arbeitsfläche ist; wobei die Arbeitsfläche des Schaber-(3)-Mechanismus, die dem Heizrad entspricht, über dem Heizrad (5) angeordnet ist, wobei die Arbeitsfläche des Laminierrads (6), die dem Heizrad (5) entspricht, auf der Seite des Heizrads (5) angeordnet ist, und wobei das Laminierrad in Drehrichtung des Heizrads (5) vor dem Schaber-(3)-Mechanismus positioniert ist,
der Schabermechanismus einen Schaber (3), einen Materialstopp (4) und Druckhebemechanismen (23) umfasst, wobei sowohl der Schaber (3) als auch der Materialstopp (4) an der Seite der Arbeitsfläche des Heizrads (5) angeordnet ist, wobei der Schaber (3) in Drehrichtung des Heizrads vor dem Materialstopp (4) positioniert ist, wobei der Schaber (3) auf der Seite des Materialstopps (4) angeordnet ist, wobei das linke Ende und das rechte Ende des Schabers (3) jeweils mit einer Verbindungsstruktur (24) fest verbunden sind, wobei der Schaber (3) über die Verbindungsstrukturen (24) mit den Druckhebemechanismen verbunden sind, die jeweils fest mit dem linken Ende und dem rechten Ende des Schabers (3) verbunden sind, und wobei die Druckhebemechanismen (23) fest mit dem Gestell (1) verbunden sind,
das linke Ende und das rechte Ende des Schabers (3) jeweils mit einem Ausgleichsrad (22) verbunden sind.

2. Maschine zur Trockenherstellung von Kunstleder nach Anspruch 1, **dadurch gekennzeichnet, dass** die Arbeitsfläche des Heizrads mit einer Teflon-Antihaftschicht versehen ist.

3. Maschine zur Trockenherstellung von Kunstleder nach einem der Ansprüche 1 oder 2, **dadurch gekennzeichnet, dass** der Heizradmechanismus (2) zumindest zwei Laminierräder (6) umfasst.

4. Maschine zur Trockenherstellung von Kunstleder nach Anspruch 1, **dadurch gekennzeichnet, dass** jede Verbindungsstruktur (24) mit einem Höheneinstellungsmechanimus (25) versehen ist, der mit einem sich längswärts erstreckenden Hebeträger (26) versehen ist, und ein Ausgleichsrad (22) unter dem Hebeträger (26) angeordnet ist.

5. Maschine zur Trockenherstellung von Kunstleder nach Anspruch 1, **dadurch gekennzeichnet, dass** jeder Druckhebemechanismus (23) einen Zylinder, eine Schiebeeinheit und eine Führungsbahn umfasst, die auf dem Gestell (1) angeordnet ist, wobei der Zylinder eine Kolbenstange umfasst und die Schiebeeinheit mit der Kolbenstange des Zylinders fest verbunden ist, mit der Führungsbahn verschiebbar verbunden ist und mit der Verbindungsstruktur (24) fest verbunden ist.

6. Maschine zur Trockenherstellung von Kunstleder nach einem der vorstehenden Ansprüche, **dadurch gekennzeichnet, dass** die Maschine zur Trockenherstellung von Kunstleder außerdem mit einem Aufwickelmechanismus (11) zum Aufwickeln von fertigen Produkten versehen ist.

7. Maschine zur Trockenherstellung von Kunstleder nach einem der vorstehenden Ansprüche, **dadurch gekennzeichnet, dass** die Maschine zur Trockenherstellung von Kunstleder außerdem mit einem Abwickelmechanismus (13) zum Bereitstellen eines Basisstreifens (14) versehen ist.

8. Maschine zur Trockenherstellung von Kunstleder nach einem der vorstehenden Ansprüche, **dadurch gekennzeichnet, dass** zumindest zwei Heizradmechanismen (2) kontinuierlich angeordnet sind.

## Revendications

1. Machine de fabrication de cuir artificiel par voie sèche, comprenant un support (1) et un mécanisme à roue chauffante (2), **caractérisé par le fait que** le mécanisme à roue chauffante (2) est disposé sur le support (1) et comprend un mécanisme de racleur (3), une roue chauffante déplacée en rotation (5) et au moins une roue de stratification (6), la roue chauffante (5) comportant un dispositif de chauffage, la surface de la circonférence externe de la roue chauffante (5) étant une surface de travail plate ; la surface de travail du mécanisme de racleur (3) correspondant à la roue chauffante étant disposée au-dessus de la roue chauffante (5), la surface de travail de la roue de stratification (6) correspondant à la roue chauffante (5) étant disposée sur le côté de la roue chauffante (5) et la roue de stratification dans la direction de rotation de la roue chauffante (5) étant positionnée devant le mécanisme de racleur (3),
le mécanisme de racleur comprend un racleur (3), une butée de réserve (4) et des mécanismes de levage par pression (23), le racleur (3) et la buté de réserve (4) étant tous deux disposés sur le côté de la surface de travail de la roue chauffante (5), le racleur (3) dans la direction de rotation de la roue chauffante étant positionné devant la butée de réserve (4), le racleur (3) étant disposé sur le côté de la butée de réserve (4), l'extrémité gauche et l'extrémité droite du racleur (3) étant respectivement reliées de façon fixe à une structure d'articulation (24), le racleur (3) étant relié aux mécanismes de levage par pression par l'intermédiaire des structures d'articulation (24) qui sont respectivement reliées de façon fixe à l'extrémité gauche et l'extrémité droite du racleur (3), et les mécanismes de levage par pression (23) étant reliés au support (1),
l'extrémité gauche et l'extrémité droite du racleur (3) sont respectivement reliées à une roue de compensation (22).

2. Machine de fabrication de cuir artificiel par voie sèche selon la revendication 1, **caractérisée par le fait que** la surface de travail de la roue chauffante comporte une couche antiadhérente en Téflon.

3. Machine de fabrication de cuir artificiel par voie sèche selon l'une des revendications 1 ou 2, **caractérisée par le fait que** le mécanisme à roue chauffante (2) comprend au moins deux roues de stratification (6).

4. Machine de fabrication de cuir artificiel par voie sèche selon la revendication 1, **caractérisée par le fait que** chaque structure d'articulation (24) comporte un mécanisme d'ajustement de hauteur (25) qui comporte une crémaillère de levage s'étendant longitudinalement (26) et une roue de compensation (22) est disposée sous la crémaillère de levage (26).

5. Machine de fabrication de cuir artificiel par voie sèche selon la revendication 4, **caractérisée par le fait que** chaque mécanisme de levage par pression (23) comprend un vérin, un coulisseau et une glissière qui est disposée sur le support (1), le vérin comprenant une tige de piston, et le coulisseau étant relié de façon fixe à la tige de piston du vérin, relié de façon coulissante à la glissière, et relié de façon fixe à la structure d'articulation (24).

6. Machine de fabrication de cuir artificiel par voie sèche selon l'une quelconque des revendications précédentes, **caractérisée par le fait que** la machine de fabrication de cuir artificiel par voie sèche comporte également un mécanisme d'enroulement (11) pour enrouler des produits finis.

7. Machine de fabrication de cuir artificiel par voie sèche selon l'une quelconque des revendications précédentes, **caractérisée par le fait que** la machine de fabrication de cuir artificiel par voie sèche comporte également un mécanisme de déroulement (13) pour fournir une bande de base (14).

8. Machine de fabrication de cuir artificiel par voie sèche selon l'une quelconque des revendications précédentes, **caractérisée par le fait qu'**au moins deux mécanismes à roue chauffante (2) sont disposés de façon continue.
